Europäisches Patentamt

European Patent Office

Office européen des brevets

(11) Publication number: **0 082 295**
**B1**

(12) **EUROPEAN PATENT SPECIFICATION**

(45) Date of publication of patent specification: **01.03.89**

(21) Application number: **82110438.7**

(22) Date of filing: **11.11.82**

(51) Int. Cl.⁴: **C 08 J 11/04, E 04 C 2/10,**
**B 32 B 27/00, C 08 L 97/02,**
**B 32 B 5/16**

(54) Composite panels derived from scrap plastics.

(30) Priority: **21.12.81 US 332764**
**21.12.81 US 332765**

(43) Date of publication of application:
**29.06.83 Bulletin 83/26**

(45) Publication of the grant of the patent:
**01.03.89 Bulletin 89/09**

(84) Designated Contracting States:
**AT BE CH DE FR GB IT LI NL SE**

(56) References cited:
**DE-A-2 921 689**
**GB-A-1 205 893**
**US-A-2 879 005**
**US-A-4 097 648**
**US-A-4 145 389**
**US-A-4 257 995**
**US-A-4 257 996**

(73) Proprietor: **THE DOW CHEMICAL COMPANY**
**2030 Dow Center Abbott Road P.O. Box 1967**
**Midland Michigan 48640-1967 (US)**

(72) Inventor: **Carroll, Woodrow**
**1219 First Street**
**Mont Belvieu Texas 77580 (US)**
Inventor: **McClellan, Thomas R.**
**115 Wyndwood Drive**
**Seabrook Texas 77586 (US)**

(74) Representative: **Henkel, Feiler, Hänzel & Partner**
**Möhlstrasse 37**
**D-8000 München 80 (DE)**

Courier Press, Leamington Spa, England.

**Description**

BACKGROUND OF THE INVENTION
Field of the Invention
This invention relates to composite panels and methods for their preparation and is more particularly concerned with composite panels which utilize comminuted scrap plastics material in association with organic polyisocyanates and with methods for preparation of said composite panels.

Description of the Prior Art
One of the side effects of the startling growth of the plastics industry, particularly in recent years, has been the creation of a problem of considerable magnitude, namely, that of disposing of the vast quantities of scrap plastics material which are being generated. For example, the present trend in the automotive industry is to replace as much of the metal structural parts as possible with synthetic plastics and this is exacerbating the waste disposal problem. Disposal of plastics scrap in landfill operations is becoming less and less possible or desirable and attention is being turned to economically feasible ways in which to utilize or recycle the scrap material.

Illustratively, a number of ways of recovering useful polyols from scrap polyurethane have been described; see, for example, U.S. Patent 3,738,946 and the prior art which is discussed therein. Recovery and recycling of polyvinylchloride and like plastics is also receiving considerable attention; see, for example, U.S. 3,836,486.

Numerous references are made in the literature to the recovery and incorporation of scrap plastics material as an inert filler in a variety of products. One of the fields in which such types of recycling has been explored is that of formation of particle board. Illustratively, Japanese Koloku 1183/80 describes the incorporation of ground glass fiber waste into particle board. German OLS 2447174 describes the continuous production of insulating panels and the like using granulated scrap rubber and like waste. Japanese Kokoku 34972/51 describes the preparation of fireboard from material which has been obtained by crushing urban waste with water, separating the metal, glass, stone and large particles therefrom, and recovering fibrous waste which contains plastics film waste and wood waste. The fibrous material so obtained is used as the core of a laminate which is compressed using heat and pressure to form a fibrous board.

To the best of the present Applicant's knowledge it has not previously been recognized that composite panels can be prepared utilizing, as part or as the whole of the material to be compacted, scrap plastics which have been comminuted to particle sizes which will be described below or that the physical properties of composite panels can be significantly improved by utilizing such scrap plastics as the inner core of a composite panel. It is believed that the present invention represents not only a highly useful manner in which to employ waste scrap plastics, but also provides a method of upgrading the properties of composite panels.

SUMMARY OF THE INVENTION
This invention comprises a composite panel which is characterized by having
an inner core layer consisting of from 5 to 100 percent scrap plastics comminuted such that 95 percent or more will pass through an 850 μm (20 mesh) sieve and cellulosic particulate material as the balance;
said inner core layer being sandwiched between outer layers of particles of organic material capable of being compacted under pressure;
said inner and outer layers and the particles in said layers being bonded together using a binder which comprises an organic polyisocyanate.

DETAILED DESCRIPTION OF THE INVENTION
The composite panels of the invention can be prepared by any of the methods previously described in the art for the preparation of particle boards of composite panels using polyisocyanate as the binder resin, the novel feature of the invention being the incorporation of comminuted scrap plastics material as a part or the whole of the particles employed to make the composites. Methods for the preparation of particle boards using organic polyisocyanate binders are well-known in the art; see, for example, U.S. 4,257,995 and the various references cited therein. As set forth therein particle boards can be prepared using polyisocyanate as the binder and employing particles of cellulosic and other materials which are capable of being compacted and bonded into the form of boards. Typical such materials are wood particles derived from lumber manufacturing waste such as planar shavings, veneer chips, wafers, flakes, sawdust and mixtures thereof. Particle of other cellulosic materials such as shredded paper, pulp or vegetable fibers such as corn stalks, straws and bagasse, and of non-cellulosic materials such as scrap polyurethane, polyisocyanurate and the like polymer foams can also be used. Inorganic materials such as hydrated alumina, gypsum and chopped mineral fibers can also be employed either alone or in combination with any of the above cellulosic or non-cellulosic materials.

In the conventional methods of preparing particle board using organic polyisocyanates as binders, the binder resin is generally applied, either neat or in the form of an aqueous emulsion, to the particles employed to form the particle board prior to forming the board from the treated particles using heat and pressure. An internal release agent can be incorporated into the organic polyisocyanate binder if desired. Such release agents include hydrocarbyl mono- and dialkyl acid phosphates and hydrocarbyl sulfonic acids. Examples of such internal release agents are shown in U.S. Patents 4,257,995, 4,257,996 and 4,258,169 and in German OLS 2921689 and 2921726.

The necessary heat and pressure required to form the board from the coated particles is generally applied utilizing a heavy-duty press with heated metal platens. However, other forms of heat such as radio frequency radiation can be used. In many instances caul plates are employed and these are interposed between the platens of the press and the boards being formed. In continuous forming operations, continuous belts may be used in place of individual caul plates. The caul plates or continuous belts are generally fabricated from aluminum, cold rolled steel, hot rolled steel, or stainless steel.

It has now been found that satisfactory composite panels can be prepared by replacing a part, or the whole of the particles previously employed for the preparation of particle boards as disclosed above by scrap plastics material which has been previously comminuted to a relatively small particle size. More particularly, the physical properties, and especially the flexural modulus properties of composite panels can be improved by incorporating into the panels a layer of such comminuted scrap plastics material as the inner core layer. For these purposes any of the more commonly avaialble plastics scrap materials can be employed including scrap derived from ABS resins, acrylic resins, nylon type materials, phenolic resins, polyethylene and polypropylene and polyvinyl chloride. These materials can be employed individually or in combination.

A type of plastics scrap material which is becoming increasingly available, due to the trends in the automobile industry to replace metal by plastics in fittings as well as in body components, is the total scrap recovered by stripping the plastics from the interior and/or exterior of junked automobiles. At the present time there is an average of from 50 to 80 kilograms of plastics used per automobile. It is conservatively estimated that approximately 10 million automobiles are scrapped per year on a worldwide basis. It will, therefore, be seen that vast amounts of scrap plastics are available from this source alone. The scrap so recovered includes cellular as well as non-cellular material. The cellular material is derived from sources such as upholstery and padding on the interior of the automobile. The non-cellular material is recovered from trim and from fenders, bumpers and the like on the exterior of the vehicle. A variety of different plastics are involved and most of them will fall in one or other of the classes set forth above.

In utilizing plastics scrap from this source, or from any other source, as material to be integrated into the composite panels of the invention, it is necessary to reduce the scrap to a finely divided particulate form, i.e. to particles of a size such that 95 percent will pass through a 850 mm (20 U.S. mesh) sieve. To achieve these particle sizes the comminution of the scrap plastics can be carried out using any methods conventional in the art. A particularly advantageous method is that which is known as cryogenic grinding. This is a well-recognized technique in the art and is paticularly useful in the treatment of plastics which tend to melt as a result of heat generated in the grinding process and which, therefore, tend to clog the grinding apparatus. Typically, the procedure involves immersing the material to be ground in a cryogenic fluid to render the material brittle and then feeding the so-treated material to a cryogenic impact mill to achieve the necessary degree of comminution. Illustrative of the equipment and procedures are those described and discussed in International Publication No. WO 80/02672. Other methods of grinding at lower temperatures such as that described in U.S. 2,878,005 can also be used to achieve the desired degree of comminution.

The comminuted plastics scrap so obtained can then be used alone or in admixture with other particulate material commonly employed to prepare particle boards. When mixtures of comminuted scrap plastics and other particulate materials are employed the amount of scrap plastics material can be as low as about 5 percent by weight but is preferably of the order of at least about 50 percent by weight or higher.

In a particular embodiment of the invention a mixture of comminuted scrap plastics and wood particles is employed in which mixtures the comminuted scrap plastics is present in at least about 5 percent by weight, preferably at least about 25 percent by weight and more preferably in at least about 50 percent by weight.

In making composite panels from the comminuted scrap plastics, alone or in admixture with other particulate materials, the particles are at first coated with an organic polyisocyanate binder. The coating of the particulate material is generally accomplished by spraying the particles with the binder composition while the particles are being tumbled or agitated in a blender or like mixing apparatus. As previously stated, the binder can be used either as the neat organic polyisocyanate or as an aqueous emulsion of the isocyanate. Generally, a total of about 2 to about 8 percent of the binder, calculated on a dry basis, i.e., excluding the water present if the binder is employed as an emulsion, is added based on the "bone dry" weight of the particles. However, higher or lower amounts of binder resin may be used in any given application. The amounts of binder in the lower range are generally employed when the particles are of a relatively large size, whereas amounts of binder in the upper range are employed when the particles are very small, that is, have a high surface area to volume ratio as is the case in the comminuted scrap plastics.

In a particular embodiment of the process of the invention it is found advantageous to include in the polyisocyanate binder an internal release agent in order to ensure good release of the finished composite panels from the metal surfaces which form the mold used in its formation. Any of the release agents previously described in the art can be used. Such release agents are described in the aforesaid U.S. Patents 4,257,995/6 and 4,258,169 as well as in German Offenlegungsschrift 2921689 and 2921726. A particularly preferred group of release agents are the mono- and dialkyl acid phosphates, the pyrophosphates derived therefrom and/or alkylsulfonic acids. These are described and exemplified in the aforesaid U.S. Patent 4,257,995.

The panels of the invention can be prepared in a range of densities and hardness. Advantageously, the density of the panels lies within the range of about 0,4806 to about 1,1214 $g/cm^3$ and preferably in the range of about 0,4806 to about 1,1214 $g/cm^3$ and preferably in the range of about 0,6408 to aout 0,9612 $g/cm^3$.

In preparing the composite panels of the invention in which the particles of scrap plastics are incorporated as an inner layer, the particles of scrap plastics which are to form the inner layer are coated with the binder system separately from the particles of cellulosic or other material which are to form the outer layer. A mat or felt which is disposed on a rigid plate as a prelude to the form in process is then prepared in layers. First a layer of coated particles which are to form one of the exterior layers is disposed on the plate using an amount and depth of particles which is appropriate to the desired thickness of the finished layer. Then a second layer, composed of coated particles of plastics scrap, is placed on top of the first layer, again in an amount appropriate to the desired thickness of the finished core layer. Finally, when a three-layer composite panel is desired, a third layer of appropriately coated particles which are the same as or different from those in the first layer is placed on top of the second layer. The mat so assembled is then formed into a composite panel by heat and pressure as described below.

The rigid plate can be the lower platen of the press or a caul plate if one is to be employed in the preparation of the particle board. A second caul plate, if one is to be used, is placed on the mat and is spaced from the lower plate by spacer bars representing the desired thickness of the particle board to be produced. If a second caul plate is not used, the upper plate of the press serves to form the upper rigid surface employed in preparing the particle board.

When preparing the composite panels of the invention the metallic surfaces which come into contact with the panels during the pressing operation, whether these surfaces be those of caul plates or the platens, can, if desired, be pretreated by application of a layer of polytetrafluroethylene to facilitate release of the finished panel from said surfaces.

The mat is then subjected to heat and compression in order to consolidate the coated particles into a unitary board. The pressing times, temperatures and pressure which are employed to achieve this result can vary widely depending on the thickness of the panel produced, the desired density of the panel, the size of the particles used and other factors well-known in the art. Pressing times can be of the order of about 2 to about 5 minutes, but higher or lower times can be employed in certain cases. The level of moisture present in the mat, particularly when wood particles are employed in admixture with the communited scrap plastics, is not critical since the polyisocyanate will react with a portion of the moisture present to form polyurea. However, it is generally desirable that the moisture content not exceed about 24 percent by weight in the wood particles if these are used in admixture with comminuted scrap plastics to form the board.

The above described process for the preparation of the composite panels of the invention can be carried out on a batch basis, that is, individual mats or felts can be molded by treating the appropriate amount of particles for the inner (core layer) and the outer layers with binder and heating and pressing the treated material. Alternatively, the process can be carried out in a continuous manner by feeding treated particles in the form of a continuous web or mat through a heating and pressing zone defined by upper and lower continuous steel belts to which and through which the necessary heat and pressure are applied.

Although the above description is limited to the use of only three layers, it will be obvious to one skilled in the art that additional layers could be employed, each additional layer alternating between a layer of coated scrap plastics and coated particles other than the scrap plastics, e.g., cellulosic particles. Such multilayered composite panels form part of the present invention.

The polyisocyanates which are used as the binders in preparing the compisite panels of the invention can be any organic polyisocyanate which contains at least two isocyanate groups per molecule. Illustrative of organic polyisocyanates are diphenylmethane diisocyanate, m- and p-phenylene diisocyanates, chlorophenylene diisocyanate, α,α-xylylene diisocyanate, 2,4- and 2,6-toluene diisocyanate and the mixtures of these two isomers which are available commercially, triphenylmethane triisocyanates, 4,4'-diisocyanatodiphenylether, and polymethylene polyphenyl polyisocyanates. The latter polyisocyanates are mixtures containing from 25 to 90 percent by weight of methylenebis(phenyl isocyanate) the remainder of the mixture being polymethylene polyphenyl polyisocyanates of functionality higher than 2.0. Such polyisocyanates and methods for their preparation are well-known in the art; see, for example, U.S. Patent Nos. 2,683,730; 2,950,263; 3,012,008 and 3,097,191. These polyisocyanates are also available in various modified forms. One such form comprises a polymethylene polyphenyl polyisocyanate as above which has been subjected to heat treatment, generally at temperatures from about 150°C to about 300°C, until the viscosity (at 25°C) has been increased to a value within the range of about 800 to 1500 mPas. Another modified polymethylene polyphenyl polyisocyanate is one which has been treated with minor amounts of an epoxide to reduce the acidity thereof in accordance with U.S. Patent No. 3,793,362.

The polymethylene polyphenyl polyisocyanates are the preferred polyisocyanates for use in the binder systems of the invention. Particularly preferred polymethylene polyphenyl polyisocyanates are those which contain from about 35 to about 65 percent by weight of methylenebis(phenyl isocyanate).

When the organic polyisocyanate is to be employed as binder system in the form of an aqueous

4

emulsion or dispersion in accordance with the invention, the aqueous emulsion or dispersion can be prepared using any of the techniques known in the art for the preparation of aqueous emulsions or dispersions, prior to use of the composition as the binder. Illustratively, the polyisocyanate is dispersed in water in the presence of an emulsifying agent. The latter can be any of the emulsifying agents known in the art including anionic and nonionic agents. Illustrative of nonionic emulsifying agents are polyoxyethylene and polyoxypropylene alcohols and block copolymers of two or more of ethylene oxide, propylene oxide, butylene oxide, and styrene; alkoxylated alkylphenols such as nonylphenoxy poly(ethyleneoxy)ethanols; alkoxylated aliphatic alcohols such as ethoxylated and propoxylated aliphatic alcohols containing from about 4 to 18 carbon atoms; glycerides of saturated and unsaturated fatty acids such as stearic, oleic and ricinoleic acids; polyoxyalkylene esters of fatty acids such as stearic, lauric, oleic acids; fatty acid amides such as the dialkanolamides of fatty acids such as stearic, lauric, oleic acids. A detailed account of such materials is found in Encyclopedia of Chemical Technology, Second Edition, Vol. 19, pp. 531—554, 1969, Interscience Publishers, New York.

The formation of the emulsion or dispersion can be carried out at any time prior to its use as the binder composition, but, preferably, it is carried out within about 3 hours prior to use. Any of the methods conventional in the art for the preparation of aqueous emulsions can be employed in preparing the aqueous polyisocyanate emulsions employed in the process of the invention. Illustratively, the emulsion is formed by bringing the polyisocyanate, emulsifying agent and water together under pressure using a conventional spray gun in which the streams of water and polyisocyanate impinge and are mixed under turbulent conditions in the mixing chamber of the spray gun. The emulsion so formed is discharged in the form of a spray which is applied to the cellulosic particles to be formed into boardstock in the manner discussed below.

If an internal release agent is employed in combination with the polyisocyanate binder, the release agent can be brought into contact with the particles as a separated component during the coating process. It can be employed in neat form, that is, without diluents, or as an aqueous solution or dispersion. Preferably, the internal release agent is incorporated into the polyisocyanate binder before application of the latter to the particles which are to be coated. The release agent is generally employed in a proportion within the range of about 0.1 to about 20 parts by weight per 100 parts by weight of polyisocyanate. Preferably, the release agent is employed in a proportion in the range of about 2 to about 10 parts by weight per 100 parts of polyisocyanate.

Reinforcing agents such as chopped glass fibers can be incorporated into the composite panels of the invention. Such agents can be employed in amounts up to about 20 percent by weight or even higher, based on total weight of particulate material employed in making the panels. Such agents are readily incorporated into the panels by blending said agents with the comminuted plastic scrap, and any other particulate material employed in combination with the scrap, prior to coating with the polyisocyanate binder. The composite panels of the invention are characterized by good physical properties, including structural strength properties, and can be employed for the purposes for which composite panels are conventionally employed in the construction and furniture industries. The present invention thus represents a way in which otherwise useless scrap material can be recovered and utilized to make useful products.

Further, as previously set forth, the composite panels of the invention are found to possess improved physical properties as compared with panels which are prepared in the same density and hardness and otherwise by an identical process except that the inner core of scrap plastics is not employed. Thus, the composite panels of the invention are found to possess markedly increased flexural modulus as compared with exactly comparable panels which do not contain the inner core. All other properties of the panel are comparable to the properties of the conventional panel without the inner core. The composite panels of the invention can be employed for all purposes for which composite panels are conventionally employed in the construction and furniture industries.

The following example describes the manner and process of making and using the invention and set forth the best mode contemplated by the inventors of carrying out the invention, but is not to be construed as limiting.

Example

Preparation of Scrap. A wrecked 1977 Pontiac Trans Am was stripped of all exterior and interior plastic components. These included:— interior seating and covers, headliner, trim and padding components, floor mats, seat divider console, exterior front and rear fascia grill and plastic lighting assemblies and trunk and floor padding components. The total weight of all the scrap plastics was approximately 63,5 kg.

The metal fasteners and inserts employed in the original mounting of these components were removed and, for the purposes of evaluations, the scrap obtained from the interior of the vehicle was segregated from that removed from the exterior.

The segregated materials were then passed through a conventional granulator equipped with a suction device to facilitate passage of the lighter weight flexible, cellular scrap through the screen without plugging. This first granulation reduced the interior material to an average size of approximately 6,35 to 12,7 mm chunks and the exterior scrap to approximately 1,59 to 3,18 mm particles.

The segregated materials were then introduced to a liquid nitrogen cryogenic grinding unit (Lin-Tech Inc.) operated at approximately −129°C and further reduced in size to the point that more than 95% would pass through an 850 mm sieve.

Aliquots of the comminuted exterior and interior scrap prepared as described were intimately mixed in a proportion of 40 parts of exterior to 60 parts of interior, representing the approximate proportions by weight of the exterior and interior plastics removed from the car, and utilized to prepare a composite panel in the following manner. A 2000 g portion of the mixed comminuted scrap was charged to a tumbler/blender approximately 122 cm in diameter and 61 cm in depth equipped with 20 baffles (61 cm × 5,7 cm) to ensure thorough mixing and exposure of the particles. The blender was rotated at approximately 10 rpm while a total of 105 g of an isocyanate binder resin containing internal release agent was sprayed on to the particles over a period of 15 min. Dispersion of the binder was accomplished using 2,06 bar air atomization. The binder comprised a mixture of polymethylene polyphenyl polyisocyanate (eq. wt. = 133: functionality 2.8) and 7 percent by weight, based on total binder, of a mixture of mono- and dilauryl acid phosphate.

In the same manner, and using the same apparatus, a batch of 2000 g of aspen wafers (measuring an average about 38,1 mm × 38,1 mm × 0,79 mm was spray coated with a total of 105 g of the same isocyanate binder resin containing internal release agent.

A composite panel was then prepared in the following manner. Half of the batch of coated aspen wafers was formed into a mat on 91,4 cm × 76,2 cm × 1,59 mm cold rolled steel plate using a 50,8 cm × 50,8 cm wooden frame. The coated auto scrap was formed into a second layer on top of the first layer of aspen wafers. Finally, the remaining half of the coated aspen wafers was formed into a third layer on top of the layer of coated auto scrap. The wooden frame was removed and a second cold rolled steel plate, of the same dimensions as the first, was placed on top of the assembled mat. Two pieces (91,4 cm × 22,2 m × 22,2 mm) of steel bar stock were interposed between the edges of the two plates to act as stops. The whole assembly was placed between the platens (preheated to 175°C) of an electrically heated press. The press was closed over a period of 30—45 s until the upper platen encountered the stops. The pressure reached 75,9 bar and was maintained thereat for 3 min with platen temperature at 175°C. Thereafter the composite panel so formed was removed from the assembly (no sticking of caul plates to the panel was observed) and was allowed to age for 1 week at 25°C before being subjected to physical testing. The physical properties determined on samples of the panel are set forth in the following Table together with the properties determined for a panel made exactly as described above but omitting the intermediate layer of scrap and using a total charge of 400 g of aspen wafers coated with 210 g of isocyanate resin binder.

TABLE

| Property | Composite Laminate | Aspen Wafers Alone |
|---|---|---|
| Hardness: Shore D | 60 | 60 |
| Density g/cm³ | 0.70 | 0.69 |
| Flexural modulus, | 2648,2 MPa | 896,5 MPa |
| Modulus of Rupture, | 23,2 MPa | 41,5 MPa |
| Water Immersion 24 h at 25°C | | |
| % change by volume | +21 | +20 |
| % change by weight | +50 | +92 |
| Taber Abrasion 1000 cycles/1000 g H—22: loss (mg) | 250 | 280 |

The above results showed that the introduction of the layer of scrap had dramatically increased the flexural modulus while causing a significant but not unsatisfactory drop in modulus of rupture.

## Claims

1. A composite panel characterized by having:

an inner core layer consisting of from 5 to 100 percent scrap plastics comminuted such that 95 percent or more will pass through an 850 µm (20 mesh) sieve and cellulosic particulate as the balance;

said inner core layer being sandwiched between outer layers of particles of organic material capable of being compacted under pressure;

said inner and outer layers and the particles in said layers being bonded together using a binder which comprises an organic polyisocyanate.

**EP 0 082 295 B1**

2. A composite panel according to Claim 1 wherein said particles in said outer layer are composed of cellulosic material.

3. A composite panel according to Claim 1 or 2 wherein said cellulosic particles are selected from the class consisting of wood wafers, wood flakes, wood chips, sawdust and mixtures thereof.

4. A composite panel according to any of Claims 1 to 3 wherein the scrap plastics particles have been produced by comminuting assorted scrap plastics utilizing a cryogenic grinding operation.

5. A composite panel according to any of Claims 1 to 4 wherein the organic polyisocyanate binder is a polymethylene polyphenyl polyisocyanate containing from 25 to 90 percent by weight of methylenebis(phenyl isocyanate), the remainder of the mixture being polymethylene polyphenyl polyisocyanates of functionality higher than 2.0.

6. A composite panel according to Claim 1 wherein said polyisocyanate also comprises an internal release agent.

7. A composite panel according to Claim 6 wherein said internal release agent is selected from the group consisting of monoalkyl acid phosphates, dialkyl acid phosphates, pyrophosphates derived from said phosphates, alkylsulfonic acids, and mixtures thereof.

8. A composite panel according to Claim 1 wherein said particulate material is blended with a minor proportion of a reinforcing agent.

**Patentansprüche**

1. Verbundplatte bzw. -panel mit einer inneren Kernschicht aus 5—100% Kunststoffabfällen, die so weit zerkleinert wurden, daß 95% oder mehr ein Sieb einer Maschenweite von 850 µm (20 mesh) hindurchfallen, und zum Rest aus teilchenförmigen Cellulosematerials, die sich zwischen äußeren Schichten aus unter Druck verfestigbaren organischen Materialteilchen befindet, wobei die innere Schicht und die äußeren Schichten und die Teilchen in diesen Schichten miteinander mit Hilfe eines ein organisches Polyisocyanat enthaltenden Bindemittels verbunden sind.

2. Verbundplatte bzw. -panel nach Anspruch 1, dadurch gekennzeichnet, daß die Teilchen in der äußeren Schicht aus Cellulosematerial bestehen.

3. Verbundplatte bzw. -panel nach Anspruch 1 oder 2, dadurch gekennzeichnet, daß die Celluloseteilchen aus Holzplättchen, Holzschuppen, Holzschnitzeln, Sägespänen und/oder Mischungen derselben bestehen.

4. Verbundplatte bzw. -panel nach einem der Ansprüche 1 bis 3, dadurch gekennzeichnet, daß die teilchenförmigen Kunststoffabfälle durch Vermahlen von sortierten Kunststoffabfällen im Rahmen eines Tieftemperaturmahlverfahren hergestellt wurden.

5. Verbundplatte bzw. -panel nach einem der Ansprüche 1 bis 4, dadurch gekennzeichnet, daß das organische Polyisocyanatbindemittel aus einem Polymethylenpolyphenylpolyisocyanat mit 25—90 Gew.-% Methylenbis(phenylisocyanat) und zum Rest Polymethylenpolyphenylpolyisocyanaten einer Funktionalität von über 2,0 besteht.

6. Verbundplatte bzw. -panel nach Anspruch 1, dadurch gekennzeichnet, daß das Polyisocyanat ein internes Trennmittel enthält.

7. Verbundplatte bzw. -panel nach Anspruch 6, dadurch gekennzeichnet, daß das interne Trennmittel aus der Gruppe Monoalkylsäurephosphate, Dialkylsäurephosphate, Pyrophsophate dieser Phosphate, Alkylsulfonsäuren und deren Mischungen ausgewählt ist.

8. Verbundplatte bzw. -panel nach Anspruch 1, dadurch gekennzeichnet, daß das teilchenförmige Material mit einer untergeordneten Menge eines Vrstärkungsmittel gemischt ist.

**Revendications**

1. Panneau composite, caractérisé en ce qu'il possède:
une couche d'âme, intérieure, constitué, de 5 à 100% de déchets de matières plastiques, broyés de façon qu'au moins 95% passent à travers un tamis d'ouverture de maille 850 µm (20 mesh), le reste étant constitué de matières particulaires cellulosiques;
ladite couche d'âme intérieure étant intercalée en sandwich entre les couches extérieures, en particules d'une matière organique, pouvant être compactées sous pression;
lesdites couches, intérieure et extérieures, ainsi que les particules desdites couches, étant liées les unes aux autres à l'aide d'un liant comprenant un polyisocyanate organique.

2. Panneau composite selon la revendication 1, dans lequel lesdites particules de ladite couche extérieure sont constituées d'une matière cellulosique.

3. Panneau composite selon la revendication 1 ou 2, dans lequel lesdites particules cellulosiques sont choisies dans la classe comprenant les galettes de bois, les flocons de bois, les copeaux de bois, la sciure et leurs mélanges.

4. Panneau composite selon l'une quelconque des revendications 1 à 3, dans lequel les particules de déchets de matières plastiques ont été obtenues par broyage de déchets assortis de matières plastiques, en faisant appel à une opération de broyage cryogénique.

5. Panneau composite selon l'une quelconque des revendications 1 à 4, dans lequel le liant

7

polyisocyanate organique est un polyméthylène-polyphényl-polyisocyanate contenant de 25 à 90% en poids de méthylènebis(isocyanate de phényle), le reste du mélange étant constitué de polyméthylène-polyphényl-polyisocyanates ayant une fonctionnalité supérieure à 2,0.

6. Panneau composite selon la revendication 1, dans lequel ledit polyisocyanate comprend aussi un agent de démoulage interne.

7. Panneau composite selon la revendication 6, dans lequel ledit agent de démoulage interne est choisi dans le groupe comprenant les phosphates acides monoalkyliques, les phosphates acides dialkyliques, les pyrophosphates dérivant de ces phosphates, les acides alkylsulfoniques et leurs mélanges.

8. Panneau composite selon la revendication 1, caractérisé en ce qu'un faible pourcentage d'un agent de renforcement est mélangé à ladite matière particulaire.